Europäisches Patentamt

European Patent Office

Office européen des brevets

(19)

(11) Veröffentlichungsnummer: **0 273 063**
**B1**

# EUROPÄISCHE PATENTSCHRIFT

(12)

(45) Veröffentlichungstag der Patentschrift:
**14.02.90**

(51) Int. Cl.⁴: **G01M 1/22**, G01M 1/20

(21) Anmeldenummer: **86118074.3**

(22) Anmeldetag: **24.12.86**

(54) **Verfahren zum Kalibrieren eines Auswuchtgeräts.**

(43) Veröffentlichungstag der Anmeldung:
**06.07.88 Patentblatt 88/27**

(45) Bekanntmachung des Hinweises auf die Patenterteilung:
**14.02.90 Patentblatt 90/7**

(84) Benannte Vertragsstaaten:
**DE FR GB IT**

(56) Entgegenhaltungen:
**DE-A- 2 756 829**
**DE-A- 3 017 240**
**US-A- 4 357 832**
**US-A- 4 535 411**
**US-A- 4 555 943**
**US-E- 31 971**

(73) Patentinhaber: **Schenck Auto-Service-Geräte GmbH,
Landwehrstrasse 63 Postfach 4129,
D-6100 Darmstadt(DE)**

(72) Erfinder: **Guyot, Volker, Gartenstrasse 7,
D-6087 Büttelborn 2(DE)**

(74) Vertreter: **Dallhammer, Herbert, Dipl.-Ing., c/o
Schenck-Auto-Service-Geräte GmbH Patentabteilung
Postfach 4129 Landwehrstrasse 63,
D-6100 Darmstadt(DE)**

## Beschreibung

Die Erfindung offenbart ein Verfahren zum Kalibrieren eines Auswuchtgeräts für das Auswuchten von am Fahrzeug montierten Rädern mit Anzeigeeinrichtungen für Unwuchtwinkellage und -größe, Schaltungen für die Verarbeitung der über Schwingungsumformer aufgenommenen Unwuchtschwingungen und für die Verarbeitung der Unwuchtwinkellage – Unwuchtmeßeinrichtung – sowie Unwuchtausgleichsgewichten zur Kompensation der Unwucht am Fahrzeugrad, wobei die nach einem Meßlauf gespeicherten und angezeigten Unwuchtinformationen mit einem Ausgleichsgewicht der angezeigten Größe an der angezeigten Winkellage am Fahrzeugrad ausgeglichen werden und wobei ein Kontrollauf durchgeführt wird, dessen Ergebnisse gespeichert und angezeigt werden, wobei bei Unterschreiten eines Toleranzwertes der Auswuchtvorgang abgebrochen wird, sowie Schaltungsanordnungen hierzu.

Im Betrieb befindliche rotierende Bauteile, die einem Verschleiß durch Verschmutzung oder Abrieb unterworfen sind oder die zufolge Aufspannen Spannfehler aufweisen, sind in gewissen Abständen durch so genanntes Nachwuchten oder Betriebswuchten auf ihre Laufruhe hin zu untersuchen. Dabei soll möglichst der auf stationären Auswuchtmaschinen erzielte dynamische Unwuchtausgleich nicht verändert werden. Derartige rotierende Bauteile sind beispielsweise Gelenkwellen an Großmaschinen, Ventilatoren, Gebläse und Turbinen an stationären Maschinen und Kardanwellen, Bremstrommeln und Räder an Fahrzeugen als rotierende Bauteile an beweglichen Maschinen.

Am Kraftfahrzeug montierte Räder werden, falls sie am Kraftfahrzeug ausgewuchtet werden sollen, beispielsweise mittels eines Friktionsantriebs angetrieben, wenn das Kraftfahrzeug hierfür an der zu untersuchenden Achse angehoben wird, so daß das Rad freikommt. Angetriebene Räder des Kraftfahrzeugs können nach Anheben auch mittels des eigenen Kraftfahrzeugmotors angetrieben werden. Eine weitere Vorbereitung der Räder im Hinblick auf das Auswuchten findet nicht statt. So verbleiben insbesondere bereits gesetzte Ausgleichsgewichte am Fahrzeugrad; zu diesen Ausgleichsgewichten werden beim Auswuchten der Räder am Fahrzeug zusätzliche Ausgleichsgewichte gesetzt. Eine Entfernung der ursprünglich gesetzten Ausgleichsgewichte findet nicht statt. Würden diese Gewichte entfernt, würde das dynamische Gleichgewicht des auf einer stationären Auswuchtmaschine ausgewuchteten Rades geeinflußt.

Durch die DE-PS 30 17 240 ist eine Vorrichtung zum Bestimmen der Unwucht von an Kraftfahrzeugen montierten Rädern, bei dem ein Meßwertaufnehmer zur Aufnahme der von der Unwucht hervorgerufenen Kräfte bzw. Schwingungen eines angehobenen Kraftfahrzeugrades vorgesehen ist und eine Antriebseinrichtung zum Drehen des angehobenen Kraftfahrzeugrades und eine Meßeinrichtung zur Bestimmung der Unwucht nach Größe und Richtung, wobei die Anzeige der Unwucht mittels zweier Meßläufe einmal mit und einmal ohne Zusatzgewicht bekannter Größe justiert wird, bekannt geworden, bei der zur Lösung der Aufgabe durch eine Vorrichtung zur Bestimmung der Unwucht von an Kraftfahrzeugen montierten Rädern, bei der direkt von der angezeigten Unwuchtgröße auf das einzusetzende Ausgleichsgewicht geschlossen werden kann, vorgeschlagen wird, zwei parallel geschaltete Speicher vorzusehen, denen die Unwuchtwerte nach Größe und Richtung des ersten Meßlaufs eingegeben werden und den Speichern einen Differenzbildner nachzuordnen, der die Differenz aus den, im ersten Meßlauf gespeicherten Meßwerten und den Meßwerten des zweiten Meßlaufs bildet und einer nachgeschalteten Anzeige weiterleitet und zwischen den Speichern und dem Differenzbildner Schalter vorzusehen, von denen ein Schalterpaar nach der an sich bekannten Justage der Größenanzeige mittels des Empfindlichkeitseinstellers geöffnet wird, so daß die gemessene und gespeicherte Unwuchtgröße richtig ohne erneuten Meßlauf an der Anzeige angezeigt wird. Durch diese Vorrichtung wird die Unwuchtgrößenanzeige durch zwei Meßläufe kalibriert, so daß anschließend der Unwuchtausgleich am Kraftfahrzeug montierten Räder durchgeführt werden kann.

Die US-PS 3 678 761 offenbart ein Verfahren und eine Vorrichtung, bei der mittels eines an einer bekannten Stelle gesetzten Ausgleichsgewichtes eine Kalibrierung einer Unwuchtmeßeinrichtung auf die Schwingungsgegebenheiten des zu untersuchenden Kraftfahrzeugrades durchgeführt wird. Die aufgrund des bekannten Gewichts und der bereits vorhandenen Unwucht gemessene und angezeigte Unwuchtgröße und der Winkel werden mittels elektrischer Einstellregler so lange verstellt bis die Anzeige den bekannten Größen entspricht.

In der US-A 4 555 943 wird in Figur 6 ein anfänglicher Kalibrierwert mit der Kurve M dargestellt. Es handelt sich hierbei um ein Näherungsverfahren, bei dem von einem ersten fiktiven Unwuchtwert ausgegangen wird.

Ausgehend hiervon liegt der vorliegenden Erfindung die Aufgabe zugrunde, ein Verfahren zur zwingenden Anpassung eines Auswuchtgerätes aufgrund von Meßergebnissen mittels Kalibrierung an die Schwingungsgegebenheiten des einzelnen an der Maschine befestigten rotierenden Bauteils vorzuschlagen sowie eine Schaltungsanordnung hierzu. Diese Aufgabe wird mit dem erfinderischen Verfahren gemäß Anspruch 1 gelöst.

Gemäß der Lehre des Verfahrensanspruchs 1 wird im Falle der erforderlich werdenden Kalibrierung der letzte Meßlauf als Kontrollauf zum Kalibrierlauf, wobei die nach diesem Kalibrierlauf erscheinende Unwuchtgröße und der angezeigte Unwuchtwinkel bereits die zu beseitigende Unwuchtgröße an der entsprechenden Stelle des rotierenden Bauteils charakterisieren. Durch die zwangsläufige Kalibrierung werden nicht nur die im Stand der Technik zwingend erforderlichen zwei Meßläufe für eine Kalibrierung vermieden, sondern es zeigt der zweite Meßlauf am rotierenden Bauteil als Kontrollauf entweder die Richtigkeit der vorhergehenden Messung an oder als Kalibrierlauf das erforderliche Ausgleichsgewicht an der entsprechenden Stelle an. Hierdurch werden erstmals insbesondere die bei montierten Kraftfahrzeugrädern am Kraftfahrzeug auftretenden verschiedenen Schwingungsbedingungen der Räder untereinander aufgedeckt und gleichzeitig für die Unwuchtmessung durch zwangsläufiges Kalibrieren der Unwuchtmesseinrichtung eliminert, dasselbe Ergebnis wird beispielsweise beim Ausgleich von Bremstrommeln im montierten Zustand am Fahrzeug erreicht.

In den kennzeichnenden Merkmalen des Anspruchs 2 wird eine Ausgestaltung des erfinderischen Verfahrens für gewichtsgestufte Ausgleichsgewichte unter Schutz gestellt. Auch in diesem Falle ist der Kontrolllauf sofort Kalibrierlauf mit Anzeige der richtigen Unwuchtgröße und der richtigen Unwuchtwinkellage. Bei einem nach dieser erfinderischen Ausgestaltung des Verfahrens betriebenen Auswuchtmaschine wird nach dem Kontrolllauf auch eine nicht gestufte Größe eines Ausgleichsgewichts angezeigt, so daß der Auswuchtende durch Manipulieren am neu einzusetzenden Ausgleichsgewicht, das im Kontrollauf angezeigte Gewicht ausgleichen kann.

In Anspruch 3 wird eine andere Ausgestaltung des erfinderischen Verfahrens für gewichtsgestufte Ausgleichsgewichte unter Schutz gestellt. Durch die erfinderische, zwangsläufige Stufung werden nur Werte angezeigt, die mit gewichtsgestuften Ausgleichsgewichten ausgleichbar sind.

In noch weiterer Ausgestaltung des Erfindungsgegenstandes wird in Anspruch 4 die Anzeige einer 0 unter Schutz gestellt, wenn beim Kontrollauf der eingegebene Toleranzwert für den erlaubten Unterschied zwischen gemessenem Unwuchtwert und der beim Kontrollauf auftretenden Restunwucht einschießlich Winkellage unterschritten wird.

Das erfinderische Verfahren zeichnet sich allgemein dadurch aus, daß bereits als erstes ein Meßlauf durchgeführt wird, bei dem sowohl Unwuchtgröße als auch Winkellage der Unwucht angezeigt werden; entsprechend diesen Werten wird ein Ausgleichsgewicht gesetzt; der anschließende Meßlauf zeigt, ob das ausgewuchtete rotierende Bauteil mit der vorhergehenden Kalibrierung des Meßgeräts ausgewuchtet werden konnte. Ist die Kalibrierung falsch gewesen, was sich durch eine andere Anzeige ausdrückt, wird eine Umschaltung vorgenommen, damit ist dieser Meßlauf als Kontrolllauf zum Kalibrierlauf geworden und zeigt eine neue Unwuchtgröße und einen neuen Unwuchtwinkel an; diese Werte werden mit Hilfe des bereits gesetzten Unwuchtausgleichsgewichts ermittelt; somit ist das Meßgerät auf die neuen Schwingungsbedingungen kalibriert, so daß nach Beendigung des Laufs lediglich das erste Gewicht abgenommen werden muß und ein neues Gewicht in der angezeigten Größe an der angezeigten Umfangslage des rotierenden Bauteils gesetzt werden muß. Nach Setzen dieses Ausgleichsgewichts ist ein erneuter Lauf für dieses Bauteil nicht erforderlich und es kann anschließend das nächste an derselben Maschine montierte rotierende Bauteil mit der nun vorhandenen Kalibrierung auf Unwucht untersucht werden. Damit entfallen alle bisher erforderlichen Probeläufe mit verschobenen vergrößerten oder verkleinerten Ausgleichsgewichten in mehreren Meßläufen für die anderen Räder eines zu untersuchenden Kraftfahrzeugs, wenn entsprechend dem Stand der Technik pro Fahrzeug, wegen des eingangs genannten Aufwandes nur einmal eine Kalibrierung durchgeführt wurde.

Durch die Erfindung hingegen wird erstmals eine Kombination aus der Messung von Unwuchtwerten und der Kalibrierung des Meßgeräts auf die Meßgegebenheiten offenbart, wodurch zwangsläufig die Kalibrierung in den Meßvorgang einbezogen wird.

In Anspruch 5 wird eine Kombination aus einer Schaltungsanordnung mit einem Unwuchtmeßaufnehmer, einem Winkellagengeber einer Unwuchtmeßeinrichtung zur Bestimmung der Unwuchtwerte mit Speichern und einer Unwuchtanzeige sowie Schaltern zur Lösung der der Erfindung zugrundeliegenden Aufgabe und zur Durchführung des Verfahrens unter Schutz gestellt. Zufolge erfinderischen Einsatzes eines Rechenwerks, welches über einen Polarwandler mit Subtraktionseinrichtungen verbunden ist und welches über einen Mehrfachschalter mit der Unwuchtanzeige verbunden ist und über Wertespeicher mit dem Ausgang eines ersten Polarwandlers, durch Einflußnahme des Rechenwerks über einen weiteren Ausgang auf die Unwuchtmeßeinrichtung und durch die Verbindung eines Sollwertgebers mit dem Rechenwerk wird nicht nur eine Bestimmung der neuen Unwuchtmeßwerte erreicht, sondern gleichzeitig auch eine Einflußnahme auf die Unwuchtmeßeinrichtung ermöglicht. Die Erfindung zeigt erstmals einen Weg auf, durch das erfinderische zwangsläufige Kalibrieren des Meßgeräts gleichzeitig Unwuchtgröße und Unwuchtwinkellage an die jeweilien Schwingungsgegebenheiten anzupassen. Damit wird jeder an einer Maschine im montierten Zustand auszuwuchtender rotierender Körper rasch und richtig ausgewuchtet.

Bei der in Anspruch 6 unter Schutz gestellten anderen erfindungsgemäßen Schaltungsanordnung ist am Ausgang der Unwuchtmeßeinrichtung der Unwuchtmeßwert in polarer Form, also nach Winkellage und Größe, vorhanden, hingegen bei der gemäß Anspruch 5 unter Schutz gestellten erfindungsgemäßen Schaltunganordnung in Komponenten vorhanden.

Bei den unter Schutz gestellten invers betriebenen Polarwandlern werden die Komponenten des Unwuchtwertes erzeugt durch Multiplikation der Größe mit dem Sinus und Cosinus des Winkels; beim Polarwandler wird aus den Komponenten des Unwuchtwertes mittels Wurzel aus der Summe der Quadrate der Komponenten die Größe bestimmt, während der Winkel aus dem Arkustangens der Komponenten ermittelt wird.

Eine erfindungsgemäße Ausgestaltung der Schaltungsanordnung gemäß Anspruch 7 besteht darin, daß ein zusätzlicher Unwuchtmeßwertaufnehmer verwendet wird und ein weiterer Winkellagengeber an die Unwuchtmeßeinrichtung über einen Schälter anlegbar sind. Damit wird insbesondere bei den angetriebenen Rädern eines zur Messung angehobenen Fahrzeugs ohne Umrüsten des einen Unwuchtmeßaufnehmers nach einem Kontrollauf auf das andere zu untersuchende Rad und ohne Umrüsten des Winkellagengebers allein durch Umlegen des Schalters die erfindungsgemäße Schaltungsanordnung einsetzbar für das zweite zu untersuchende Rad einschließlich Bremstrommel oder bei abgenommenen Rädern für die zweite zu untersuchende Bremstrommel.

In noch weiterer Ausgestaltung der erfindungsgemäßen Schaltungsanordnung wird vorgeschlagen, die Schaltungsanordnung als Mikroprozessorsystem auszugestalten.

In der nachfolgenden Beschreibung wird die Erfindung anhand schematisch dargestellter Schaltungsanordnungen an Beispielen näher erläutert.

Es zeigen:

Fig. 1 eine Schaltungsanordnung, bei der die Unwuchtinformation in Komponenten am Ausgang einer Unwuchtmeßeinrichtung ansteht und

Fig. 2 eine Schaltungsanordnung, bei der die Unwuchtinformation in Betrag und Winkel am Ausgang einer Unwuchtmeßeinrichtung ansteht.

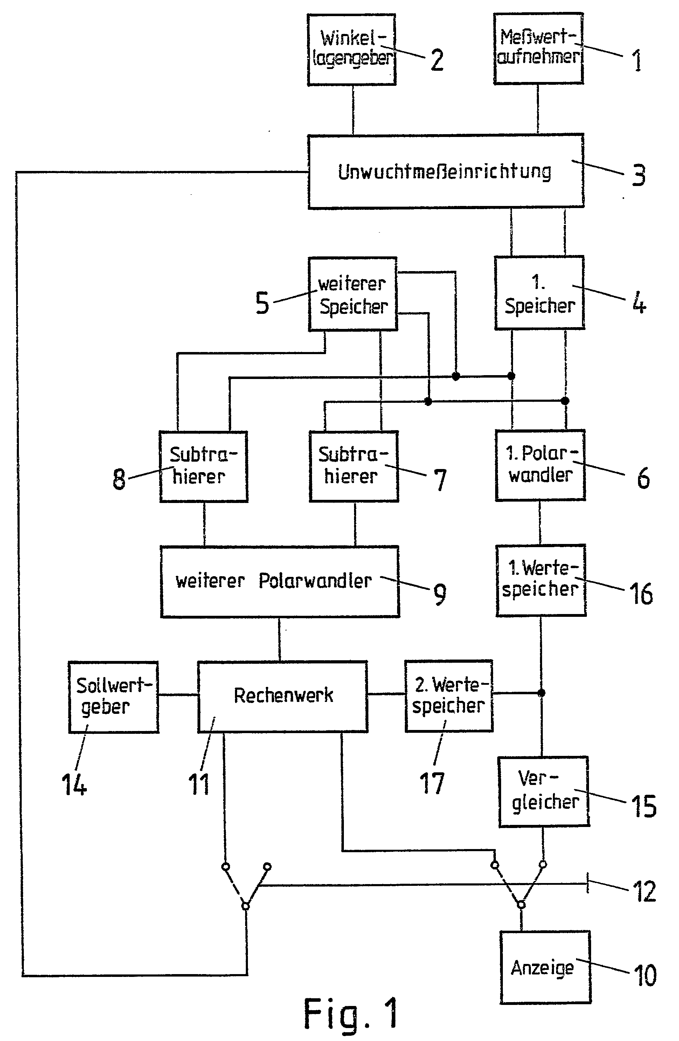

In der nachfolgenden Beschreibung werden gleiche Bauteile mit denselben Bezugsziffern versehen. Gmeäß Fig. 1 nimmt beim Meßlauf ein Meßwertaufnehmer 1 die von einem an einer Maschine angeordneten rotierenden Körper ausgehenden Unwuchtschwingungen auf und leitet diese weiter an eine Unwuchtmeßeinrichtung 3. Mit der Unwuchtmeßeinrichtung 3 ist weiterhin ein Winkellagengeber 2 verbunden, der zufolge einer an dem rotierenden Körper angeordneten Markierung beim Meßlauf Informationen über diese Markierung der Unwuchtmeßeinrichtung 3 übermittelt.

Es kann sich hierbei um am Kraftfahrzeugrad montierte Antriebsräder handeln, die beispielsweise nach Anheben des Fahrzeugs über den Fahrzeugmotor angetrieben werden und bei denen an jedem Rad Markierungen als Winkelbezugsmarken angebracht sind. Falls es sich um nicht mit Eigenantrieb augetriebene rotierende Bauteile handelt, wie nicht angetriebene Kraftfahrzeugräder oder deren Bremsen, die für sich nach Abnahme der Räder untersucht werden sollen, werden diese über beistellbare Antriebseinrichtungen wie Reibradantriebe angetrieben.

In der Unwuchtmeßeinrichtung 3 werden die Informationen, die vom Meßwertaufnehmer 1 und die vom Winkellagengeber 2 während des Meßlaufs kommen, so verarbeitet, daß, wie im Ausführungsbeispiel angegeben, die Vertikal- und die Horizontalkomponente der Unwucht einem ersten Speicher 4 übergeben werden kann; diese Komponenten enthalten Informationen über die Unwuchtgröße und Unwuchtwinkellage. Der erste Speicher 4 ist nunmehr mit einem weiteren Speicher 5 einerseits und einem ersten Polarwandler 6 andererseits verbunden. Bei den Polarwandlern handelt es sich beispielsweise um Einrichtungen gemäß der DE-PS 23 48 498, die aus den Unwuchtkomponenten den Betrag und den Winkel der gemessenen Unwucht bestimmen. Im Polarwandler 6 werden der Betrag und der Winkel der Unwucht des Meßlaufs bestimmt und einem ersten Wertespeicher 16 getrennt zugeführt und gespeichert und über einen Vergleicher 15 und einen Mehrfachschalter 12 in einem Anzeigegerät 10 angezeigt. Entsprechend dieser Anzeige wird ein Ausgleichsgewicht an dem rotierenden Körper an der angegeben Winkellage gesetzt.

Nachdem der Vergleicher an seinem Ausgang den Eingangswert unverändert anzeigt, wenn er über einer Toleranzwelle liegt, und den Wert 0, wenn der Eingangswert die Toleranzschwelle unterschreitet, zeigt somit im Falle keiner Veränderung des Auswuchtzustandes seit dem letzten Nachwuchten der Meßlauf selbst die Auswuchtgüte bereits an.

Beim nächsten Meßlauf als Kontrollauf für die Güte des gesetzten Gewichts wird das Ergebnis, wie zum ersten Meßlauf bereits beschrieben, zum einen im Anzeigegerät 10 angezeigt und bewirkt zum anderen ein Weiterschieben der aus dem ersten Meßlauf gewonnenen Ergebnisse. Ist die Anzeige 0 - dies tritt immer dann ein, wenn der Ausgleich richtig war oder noch unterhalb der eingestellten Toleranzgrenze im Vergleicher 15 ist - wird der nächste rotierende Körper, beispielsweise das andere Antriebsrad des Kraftfahrzeugs vermessen. In der Zwischenzeit sind die bisherigen Werte aus dem ersten Speicher 4 in den weiteren Speicher 5 weitergegeben worden, während im ersten Speicher 4 nun die Meßwerte des Kontrollaufs gespeichert sind. Gleichermaßen werden die nach Winkellage und Größe gespeicherten Werte aus dem Meßlauf einem zweiten Wertespeicher 17 zugeführt und dort gespeichert, während im ersten Wertespeicher 16 die Werte aus dem Kontrollauf gespeichert werden. Die Vertikal- und Horizontalwerte der Unwuchtwirkung vom Kontrollauf werden aus dem ersten Speicher 4 und die vom Meßlauf aus dem weiteren Speicher 5 Subtra tionseinrichtungen 7, 8 zugeführt. Die Ergebnisse der Subtraktionen werden einem weiteren Polarwandler 9 zugeführt, und im Polarwandler 9 wird der Betrag und die Winkellage aus der in Komponenten vorliegenden Differenzunwucht bestimmt.

Der Betrag und die Winkellage der aus dem Subtraktionsergebnis erhaltenen Unwucht (Ausgang Polarwandler 9) und der Betrag und die Winkellage der aus dem Meßlauf gewonnenen Unwucht (Ausgang Wertespeicher 17) werden einem Rechenwerk 11 zugeführt.

Ist die im Anzeigegerät 10 erscheinende Information bezüglich des nach dem ersten Meßlauf gesetzten Ausgleichsgewichts ungleich 0, wird der Mehrfachschalter 12 in die gestrichelt dargestellte Lage gebracht, so daß das Rechenwerk 11 mit der Anzeige 10 verbunden ist. Im Rechenwerk 11 wird durch Division des Quadrats des Unwuchtbetrags aus dem Meßlauf durch den Unwuchtbetrag der Differenz aus Meß- und Kontrollauf der neue Unwuchtbetrag ermittelt, durch Subtraktion des Winkels aus dem Kontrollauf vom doppelten Winkel des Meßlaufs der neue Unwuchtwinkel bestimmt. Hierzu werden bekannte elektronische Multiplizierer und Addierer verwendet. Gleichzeitig wird der bisherige im Rechenwerk 11 enthaltene Kalibrierwert durch einen neuen Kalibrierwert ersetzt, der aus dem Quotienten aus Unwuchtbetrag des Meßlaufs und Unwuchtbetrag aus der Differenz zwischen Meßlauf und Kontrollauf multipliziert mit dem bisherigen Kalibrierwert besteht. Durch die Stellung des Mehrfachschalters in der gestrichelten Lage werden die neuen Werte über Betrag und Winkellage der Anzeige 10 zugeführt und der neue Kalibrierwert an die Unwuchtmeßeinrichtung 3 weitergegeben.

Darüber hinaus ist ein Sollwertgeber 14 für eine vorzugebende Größe des Ausgleichsgewichts mit dem Rechenwerk 11 verbunden. Dieser Sollwertgeber 14 dient dazu, anstelle der exakt angezeigten Unwuchtwerte vorrätige gewichtsgestufte Ausgleichsgewichte zum Ausgleich zu verwenden.

Zeigt beispielsweise die Anzeige 10 ein Ausgleichsgewicht von 17 Gramm an, so wird über den Sollwertgeber 14 die nächste vorrätige Ausgleichsgewichtsstufe (z. B. 15 Gramm oder 20 Gramm) in das Rechenwerk eingegeben. Dort wird der exakte Wert in Abhängigkeit des eingegebenen Werts umgerechnet, gleichzeitig auch die Änderung der Winkellage berücksichtigt und die gewählte Gewichtsstufe mit dem zugehörigen Ausgleichsgewicht angezeigt. Die Umrechnung erfolgt hierbei so, daß der exakte Wert aus dem Meßlauf mit dem eingegebenen gestuften Wert multipliziert wird. Gleichzeitig wird der so gewonnene neue Kalibrierwert an die Unwuchtmeßeinrichtung 3 zwangsläufig weitergegeben.

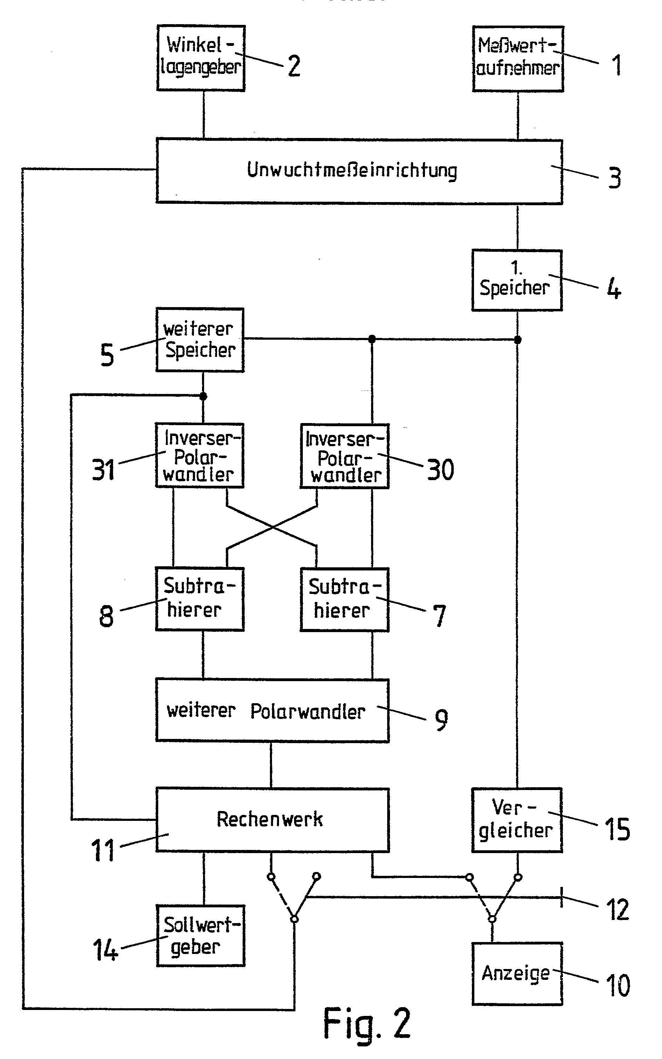

Eine weitere Realisierung zeigt Fig. 2.

Die vom Meßwertaufnehmer 1 und vom Winkellagengeber 2 während des Meßlaufs aufgenommenen Unwuchtinformationen werden der Unwuchtmeßeinrichtung 3 zugeführt und dort soweit verarbeitet, daß sie am Ausgang der Unwuchtmeßeinrichtung 3 die Unwucht in Form von Wuchtgröße und Winkellage bereits enthalten. Diese Informationen werden dem ersten Speicher 4 zugeführt und von diesem über den Vergleicher 15 an das Anzeigegerät 10 weitergegeben. Hierbei befindet sich der Mehrfachschalter 12 in der ausgezogenen Stellung.

Das in der Anzeige 10 angezeigte Gewicht wird am Kraftfahrzeugrad an der in der Anzeige 10 ebenfalls angezeigten Winkellage setzt. Beim nächsten Meßlauf als Kontrollauf für die Güte des gesetzten Gewichtes wird das Ergebnis, wie zum ersten Meßlauf bereits beschrieben, zum einen im Anzeigegerät 10 angezeigt und bewirkt zum anderen ein Weiterschieben der aus dem ersten Meßlauf gewonnenen Ergebnisse. Ist die Anzeige 0, so kann, wie zu Fig. 1 bereits beschrieben, der nächste rotierende Körper untersucht werden.

Während dieses Kontrollaufs ist jedoch die Information vom ersten Meßlauf zum einen in den weiteren Speicher 5 transportiert worden und zum anderen in einen inversen Polarwandler 30. Diese Werte werden nunmehr während des Meßlaufs unabhängig von der über den Vergleicher 15 im Anzeigegerät 10 anzuzeigenden Größe folgendermaßen weiterverarbeitet. Vom weiteren Speicher 5 werden die Informationen einem weiteren inversen Polarwandler 31 zugeführt. Am Eingang des inversen Polarwandlers 31 steht nunmehr die Information über den Betrag und den Winkel aus dem ersten Meßlauf an während am inversen Polarwandler 30 die Information aus Betrag und Winkel des Kontrollaufs anstehen. In den inversen Polarwandlern wird nunmehr die Umrechnung der in Betrag und Winkel vorhandenen Unwuchtgrößen in deren Komponenten vorgenommen, so daß am Ausgang des inversen Polarwandlers die Komponenten aus dem Kontrollauf und am Ausgang des inversen Polarwandlers 31 die Komponenten des Meßlaufs anstehen. Diese Werte werden nunmehr, wie zu Fig. 1 bereits beschrieben, der Subtraktionseinrichtung 7, 8 zugeführt, deren Ergebnisse dem weiteren Polarwandler 9, wie zu Fig. 1 bereits beschrieben, in eine Differenzunwucht nach Betrag und Winkel umgewandelt werden. Diese Werte und die vom Meßlauf herrührenden Werte werden dem Rechenwerk 11 zugeführt. Dort erfolgt die Verarbeitung dieser Werte in derselben Weise wie zu Fig. 1 bereits beschrieben. Es wird also auch hier, falls in der Anzeige 10 beim Kontrollauf eine von 0 verschiedene Information erscheint, der Schalter 12 in die gestrichelte Lage gebracht, so daß nunmehr das Rechenwerk mit der Anzeige 10 verbunden ist. Auch hier wird, wie ebenfalls zu Fig. 1 bereits beschrieben, der neu entstehende Kalibrierwert zwangsläufig der Unwuchtmeßeinrichtung anschließend zugeführt.

## Patentansprüche

1. Verfahren zum Einstellen eines Auswuchtgeräts auf das nicht bekannte Schwingungsverhalten der Aufhängung eines zu untersuchenden Bauteils mit Anzeigeeinrichtungen für Unwuchtwinkellage und -größe, Schaltungen für die Verarbeitung der über Schwingungsumformer aufgenommenen Unwuchtschwingungen und für die Verarbeitung der Unwuchtwinkellage sowie Ausgleichsgewichten zur Kompensation der Unwucht am Bauteil, wobei die nach einem Meßlauf gespeicherten und angezeigten Unwuchtinformationen mit einem Ausgleichsgewicht der angezeigten Größe an der angezeigten Winkellage am Bauteil ausgeglichen werden und damit ein Kontrollauf durchgeführt wird, dessen Ergebnisse gespeichert und angezeigt werden, wobei bei Unterschreiten eines Toleranzwertes der Auswuchtvorgang abgebrochen wird, und wobei die vom Meßlauf gespeicherten Werte beim Kontrollauf weiteren Speichern zugeführt werden, die neuen Werte an die Stelle der erstgespeicherten Werte treten und bei Überschreiten des vorgegebenen Toleranzwerts geschaltet wird und hierdurch der Kontrollauf zu einem Kalibrierlauf wird und wobei die Werte aus Kalibrierlauf und Meßlauf einerseits subtrahiert werden, in vektorielle Größen umgewandelt werden und anschliessend zusammen mit den vektoriellen Größen des Meßlaufs verarbeitet werden und hieraus in weiteren Schaltungen eine Neuermittlung des Ausgleichsgewichts und der Winkellage durchgeführt wird, Ausgleichsgewicht und Winkellage angezeigt werden und wobei nach Entfernen des bisherigen Ausgleichsgewichts an der neu angezeigten Winkellage das neue Ausgleichsgewicht am rotierenden Bauteil gesetzt wird und der zur Änderung des Ausgleichsgewichts und der Winkellage führende elektrische Wert als neuer Kalibrierwert benutzt wird.

2. Verfahren nach Anspruch 1 Verwendung gewichtsgestufter Ausgleichsgewichte, dadurch gekennzeichnet daß bei Anzeige von Winkellagen und Unwuchtmeßwerten nach dem zweiten Meßlauf die Größe des zum Ausgleich verwendeten ersten gewichtsgestuften Ausgleichsgewichts den weiteren Schaltungen zugeführt wird und mit Hilfe dieses Werts ohne weiteren Meßlauf das entsprechende neue Ausgleichsgewicht und die hierzu gehörende Ausgleichswinkellage angezeigt wird.

3. Verfahren nach Anspruch 1 bei Verwendung gewichtsgestufter Ausgleichsgewichte, dadurch gekennzeichnet, daß bei Anzeige von Winkellagen und Unwuchtmeßwerten nach dem zweiten Meßlauf die Größe des zum Ausgleich verwendeten ersten gewichtsgestuften Ausgleichsgewichts den weiteren Schaltungen zugeführt wird und mit Hilfe dieses Werts ohne weiteren Meßlauf zwangsläufig das entsprechende gewichtsgestufte neue Ausgleichsgewicht und die hierzu gehörende Ausgleichswinkellage angezeigt wird.

4. Verfahren nach Anspruch 1 oder 2, dadurch gekennzeichnet, daß bei Unterschreiten des Toleranzwertes eine 0 angezeigt wird.

5. Schaltungsanordnung zur Durchführung des Verfahrens nach Anspruch 2 mit einem Unwuchtmeßaufnehmer, einem Winkellagengeber, einer Unwuchtmeßeinrichtung zur Bestimmung der Unwuchtwerte mit Speichern und einer Unwuchtanzeige sowie Schaltern, wobei ein erster Speicher (4) mit der Unwuchtmeßeinrichtung (3) zur Aufnahme der Unwuchtmeßwerte (1, 2) verbunden ist, dieser Speicher (4) einerseits mit einem weiteren Speicher (5) verbunden ist und andererseits über einen ersten Polarwandler (6), einen ersten Wertespeicher (16), über einen Vergleicher (15) und über einen Mehrfachschalter (12) mit einer Anzeige (10) verbunden ist, wobei der erste (4) und der weitere Speicher (5) mit Subtraktionseinrichtungen (7, 8) verbunden sind, daß diese Subtraktionseinrichtungen (7, 8) über einen weiteren Polarwandler (9) mit einem Rechenwerk (11) verbunden sind, das einerseits über den Mehrfachschalter (12) mit der Anzeige (10) verbunden ist und das andererseits über einen zweiten Wertespeicher (17), der mit dem ersten Wertespeicher (16) mit dem Ausgang des ersten Polarwandlers (6) verbunden ist, wobei ein weiterer Ausgang des Rechenwerks (11) in Abhängigkeit der Schaltstellung des Mehrfachschalters (12) mit der Unwuchtmeßeinrichtung (3) verbunden ist, und wobei ein die Größe des Ausgleichsgewichts darstellender Sollwertgeber (14) mit dem Rechenwerk (11) verbunden ist.

6. Schaltungsanordnung zur Durchführung des Verfahrens nach Anspruch 2 mit einem Unwuchtmeßaufnehmer, einem Winkellagengeber, einer Unwuchtmeßeinrichtung zur Bestimmung der Unwuchtwerte mit Speichern und einer Unwuchtanzeige sowie Schaltern, wobei ein erster Speicher (4) mit der Unwuchtmeßeinrichtung (3) zur Aufnahme der Unwuchtmeßwerte (1, 2) verbunden ist, dieser Speicher (4) einerseits mit einem weiteren Speicher (5) verbunden ist und andererseits mit einem inversen Polarwandler (30) einerseits und über einen Vergleicher (15) und einen Mehrfachschalter (12) mit einer Anzeige (10) verbunden ist, wobei der weitere Speicher (5) mit einem weiteren inversen Polarwandler (31) und mit einem Rechenwerk (11) verbunden ist, die Ausgänge der inversen Polarwandler (30, 31) mit Subtraktionseinrichtungen (7, 8) verbunden sind, deren Ausgänge mit einem Polarwandler (9) verbunden sind, wobei dem Rechenwerk (11) die Werte aus dem Polarwandler (9) zugeführt werden, das Rechenwerk (11) über den Mehrfachschalter (12) mit dem Anzeigegerät (10) zur Anzeige der im Rechenwerk (11) ermittelten neuen Werte nach Winkellage und Größe verbunden wird, wobei über den Mehrfachschalter (12) gleichzeitig ein weiterer Ausgang des Rechenwerks (11) mit der Unwuchtmeßeinrichtung (3) verbunden ist und wobei ein, die Größe des Ausgleichsgewichts darstellender Sollwertgeber (14) mit dem Rechenwerk (11) verbunden ist.

7. Schaltungsanordnung nach Anspruch 5 oder Anspruch 6, dadurch gekennzeichnet, daß ein zweiter Unwuchtmeßaufnehmer und ein zweiter Winkellagengeber mit der Unwuchtmeßeinrichtung verbunden sind und daß ein Umschalter vorgesehen ist.

8. Schaltungsanordnung nach Anspruch 5 oder 6, dadurch gekennzeichnet, daß die Schaltungsanordnung ein Mikroprozessorsystem ist.

## Claims

1. A method of adjusting a balancing device to the unknown oscillation behaviour of the suspension of a structural member to be examined, with display devices for the angular position and magnitude of the out-of-balance, circuits for processing the out-of-balance oscillations picked up via oscillation transducers and for processing the angular position of the out-of-balance, as well as compensating weights to compensate for the out-of-balance on the structural member, wherein the out-of-balance information stored and displayed after a test run is compensated by a compensating weight of the indicated size at the indicated angular position on the structural member and with this a control run is carried out, the results of which are stored and displayed, wherein, on a drop below a tolerance value, the balancing operation is broken off, and wherein the values stored from the test run are supplied to further stores during the control run, the new values replace the values first stored and, if the preset tolerance value is exceeded, switching-over is effected and as a result of this the control run becomes a calibrating run, and wherein the values from calibrating run and test run are, on the one hand, subtracted, are converted into vectorial quantities and are then processed together with the vectorial quantities of the test run and from this a fresh determination of the compensating weight and of the angular position is carried out, compensating weight and angular position are displayed, and wherein, after removal of the former compensating weight, the new compensating weight is placed on the rotating structural member at the newly indicated angular position, and the electrical value leading to the change in the compensating weight and in the angular position is used as a new calibrating value.

2. A method according to Claim 1 using weight-graduated compensating weights, characterised in that on display of angular positions and measured out-of-balance values after the second test run, the size of the first weight-graduated compensating weight used for the compensation is supplied to the further circuits and the corresponding new compensating weight and the associated angular position for compensation are displayed by means of this value without a further test run.

3. A method according to Claim 1 using weight-graduated compensating weights, characterised in that on display of angular positions and measured out-of-balance values after the second test run, the size of the first weight-graduated compensating weight used for the compensation is supplied to the further circuits and the corresponding weight-graduated new compensating weight and the associated angular position for compensation are inevitably displayed by means of this value without a further test run.

4. A method according to Claim 1 or 2, characterised in that on a drop below the tolerance value, and 0 is displayed.

5. A circuit arrangement for carrying out the method according to Claim 2, having an out-of-balance transducer, and angular-position indicator, an out-of-balance measuring device to determine the out-of-balance values with stores and an out-of-balance display, as well as switches, wherein a first store (4) is connected to the out-of-balance measuring device (3) to receive the measured out-of-balance values (1, 2), this store (4) on the one hand is connected to a further store (5) and on the other hand is connected to a display (10) through a first polar transducer (6), a first value store (16), through a comparator (15) and through a multiple contact switch (12), wherein the first (4) and the further store (5) are connected to subtraction devices (7, 8), that these subtraction devices (7, 8) are connected, through a further polar transducer (9) to an arithmetic unit (11) which, on the one hand, is connected to the display (10) through the multiple contact switch (12) and which, on the other hand, is connected to a second value store (17) which, via the first value store (16), is connected to the output of the first polar transducer (6), wherein a further output of the arithmetic unit (11) is connected to the out-of-balance measuring device (3) depending on the switching position of the multiple contact switch (12), and wherein a setpoint adjuster (14) representing the size of the compensating weight is connected to the arithmetic unit (11).

6. A circuit arrangement for carrying out the method according to Claim 2, having an out-of-balance transducer, an angular-position indicator, an out-of-balance measuring device to determine the out-of-balance values with stores and an out-of-balance display, as well as switches, wherein a first store (4) is connected to the out-of-balance measuring device (3) to receive the measured out-of-balance values (1, 2), this store (4) is, on the one hand, connected to a further store (5) and, on the other hand to an inverse polar transducer (30) on the one hand and, through a comparator (15) and a multiple-contact switch (12), to a display (10), wherein the further store (5) is connected to a further inverse polar transducer (31) and to an arithmetic unit (11) and the outputs of the inverse polar converters (30, 31) are connected to subtraction devices (7, 8), the outputs of which are connected to a polar tranducer (9), wherein the values from the polar transducer (9) are supplied to the arithmetic unit (11), and the arithmetic unit (11) is connected, through the multiple contact switch (12), to the display device (10) to display the new values determined in the arithmetic unit (11), according to angular position and magnitude, wherein a further output of the arithmetic unit (11) is simultaneously connected, through the multiple contact switch (12), to the out-of-balance measuring device (3), and wherein a setpoint adjuster (14) representing the size of the compensating weight is connected to the arithmetic unit (11).

7. A circuit arrangement according to Claim 5 or Claim 6, characterised in that a second out-of-balance transducer and a second angular-position indicator are connected to the out-of-balance measuring device and that a change-over switch is provided.

8. A circuit arrangement according to Claim 5 or 6, characterised in that the circuit arrangement is a microprocessor system.

## Revendications

1. Procédé de réglage d'un appareil d'équilibrage face au comportement aux vibrations, non connu, de la suspension d'un élément de construction devant être contrôlé, comportant des dispositifs d'affichage de la position angulaire et de la valeur du balourd, des circuits destinés au traitement des vibrations de défaut d'équilibrage captées par l'intermédiaire de convertisseurs de vibrations et au traitement de la position angulaire du balourd ainsi que des masses d'équilibrages destinées à compenser le balourd de l'élément de construction, les informations sur le balourd qui sont mises en mémoire et affichée à l'issu d'une séquence de mesure étant compensées, sur l'élément de construction, par une masse d'équilibrage ayant la valeur affichée et posée à la position angulaire affichée, et une séquence de contrôle étant pratiquée, dont les résultats sont mis en mémoire et affichés, le processus d'équilibrage étant interrompu dans le cas où l'on est passé en deçà d'une valeur de tolérance, et les valeurs mises en mémoire lors de la séquence de mesure étant fournies amenées à d'autres mémoires lors de la séquence de contrôle, les nouvelles valeurs prenant la place des valeurs mises en mémoire en premier, et, dans le cas d'un dépassement de la valeur de tolérance, il est procédé à une mise en fonctionnement et la séquence de contrôle se transforme en même temps d'une part en séquence de calibrage et les valeurs issues de la séquence de calibrage et de la séquence de mesure faisant d'une part l'objet d'une soustraction, d'une conversion en grandeurs vectorielles et ensuite d'un traitement, conjointement avec les grandeurs provenant de la séquence de mesure, un nouvelle détermination de la masse d'équilibrage et de la position angulaire étant exécutée à partir de ceci dans d'autres circuits, la masse d'équilibrage et la position angulaire étant affichées et, après enlèvement de l'ancienne masse d'équilibrage, la nouvelle masse d'équilibrage étant placée à la nouvelle position angulaire sur l'élément de construction tournant, en la valeur électrique aboutissant à la modification de la masse d'équilibrage et de la position angulaire étant utilisée comme nouvelle valeur de calibrage.

2. Procédé de réglage selon la revendication 1, dans l'utilisation de masses d'équilibrage à incrémentation de masse, caractérisé en ce que, lors de l'affichage des positions angulaire et des valeurs mesurées du balourd, à l'issu de la deuxième séquence de mesure, la valeur de la première masse d'équilibrage à incrémentation de masse qui est utilisée pour l'équilibrage est fournie aux autres circuits et, à l'aide de cette valeur, on affiche sans effectuer de séquence de mesure supplémentaire, la nouvelle masse d'équilibrage correspondante à incrémentation de masse et la position angulaire d'équilibrage lui étant associée à cet effet.

3. Procédé de réglage selon la revendication 1, dans l'utilisation de masses d'équilibrage à incrémentation de masse, caractérisé en ce que lors de l'affichage des positions angulaires et des valeurs de balourd à l'issu de la deuxième séquence de mesure, la valeur de la première masse d'équilibrage à incrémentation de masse qui est utilisée pour l'équilibrage est fournie aux autres circuits et, à l'aide de cette valeur, on affiche obligatoirement, sans effectuer de séquence de mesure supplémentaire, la nouvelle masse d'équilibrage correspondante à incrémentation de masse et la position angulaire d'équilibrage lui étant associée à cet effet.

4. Procédé de réglage selon la revendication 1 ou 2, caractérisé en ce que l'on affiche la valeur 0 lorsque l'on passe en deçà de la valeur de tolérance.

5. Montage de circuit pour l'exécution du procédé de réglage selon la revendication 2, comportant un capteur de mesure de balourd, un transmetteur de position angulaire, un dispositif de mesure du balourd dans le but de déterminer les valeurs de balourd et comprenant des mémoires et un affichage de balourd ainsi que des interrupteurs, une première mémoire (4) étant reliée au dispositif de mesure de balourd (3) dans le but de capter les valeurs du balourd (1, 2), cette mémoire (4) étant d'une part reliée à une autre mémoire (5) et d'autre part, par l'intermédiaire d'un premier convertisseur polaire (6), à une première mémoire de données (16), étant reliée, par l'intermédiaire d'un comparateur (15) et par l'intermédiaire d'un interrupteur multiple (12), à un affichage (10) la première mémoire (4) et la mémoire supplémentaire (5) étant reliées par l'intermédiaire d'un convertisseur polaire (9) supplémentaire, à un calculateur (11) qui est relié d'une part à l'affichage (10), par l'intermédiaire de l'interrupteur multiple (12), et qui est relié d'autre part, par l'intermédiaire d'une deuxième mémoire de données (17), à la première mémoire de données (16) située à la sortie du premier convertisseur polaire (6), une autre sortie du calculateur (11) étant reliée au dispositif de mesure du balourd (3), en fonction de la position de branchement de l'interrupteur multiple (12), et un transmetteur de valeur de consigne (14) représentant la valeur de la masse d'équilibrage étant relié au calculateur (11).

6. Montage de circuit pour l'exécution du procédé de réglage selon la revendication 2, comportant un capteur de mesure de balourd, un transmetteur de position angulaire, un dispositif de mesure du balourd dans le but de déterminer les valeurs de balourd et comprenant des mémoires et un affichage de balourd ainsi que des interrupteurs, une première mémoire (4) étant reliée au dispositif de mesure de balourd (3) dans le but de capter les valeurs du balourd (1, 2), cette mémoire (4) étant d'une part reliée à une autre mémoire (5) et d'autre part, à un convertisseur polaire inverse (30) d'une part et, par l'intermédiaire d'un comparateur (15) et d'un interrupteur multiple (12), à un affichage (10), la mémoire supplémentaire (5) étant reliées à un convertisseur polaire inverse (31) supplémentaire et à un calculateur (11), les sorties des convertisseurs polaires inverses (30, 31) étant reliées à des dispositifs soustracteurs (7, 8) dont les sorties sont reliées à un convertisseur polaire (9), les valeurs provenant du convertisseur polaire (9) étant amenées au calculateur (11) qui est relié, par l'intermédiaire de l'interrupteur multiple (12) à l'appareil d'affichage (10) dans le but d'afficher les nouvelles valeurs de position angulaire et de grandeur qui sont déterminées dans le calculateur (11), une sortie supplémentaire du calculateur (11) étant simultanément reliée, par l'intermédiaire de l'interrupteur multiple (12) au dispositif de mesure de balourd (3) et un transmetteur de valeur de consigne (14) représentant la valeur de la masse d'équilibrage étant relié au calculateur (11).

7. Montage de circuit selon la revendication 5 ou la revendication 6, caractérisé en ce qu'un second capteur de mesure de balourd et un second transmetteur de postion angulaire sont reliés au dispositif de mesure du balourd et qu'il est prévu un commutateur.

8. Montage de circuit selon la revendication 5 ou 6, caractérisé es ce que le montage de circuit est un système à microprocesseur.

Fig. 1

Fig. 2